# EUROPÄISCHE PATENTSCHRIFT

(11) **EP 1 655 244 B1**
(45) Veröffentlichungstag und Bekanntmachung des Hinweises auf die Patenterteilung: **03.12.2008**
(21) Anmeldenummer: 05405532.2
(22) Anmeldetag: 09.09.2005
(51) Int. Cl.: B65G 17/32, B65G 59/08, B65H 3/08, B65H 5/08

(54) **Verfahren und Vorrichtung zur Vereinzelung von flachen Gegenständen aus einem liegenden Stapel**
Method and device for separating flat articles from a horizontal stack
Procédé et dispositif de séparation d'articles plats d'une pile horizontale

(30) Priorität: 15.09.2004 CH 15112004
(43) Veröffentlichungstag der Anmeldung: 10.05.2006
(73) Patentinhaber: Ferag AG, 8340 Hinwil (CH)
(72) Erfinder: Auf der Maur, Konrad, 8625 Gossau (CH)
(74) Vertreter: Frei Patent Attorneys

(56) Entgegenhaltungen:
- EP-A- 0 352 421
- EP-A- 0 941 953
- EP-A- 1 099 632
- EP-A1- 0 705 684
- EP-A1- 0 765 736
- WO-A1-02/30753
- US-A- 3 527 367
- US-A- 5 503 519
- US-A- 5 511 772
- US-B1- 6 503 180

## Beschreibung

Die Erfindung liegt auf dem Gebiete der Stückguthandhabung und betrifft ein Verfahren und eine Vorrichtung nach den Oberbegriffen der entsprechenden, unabhängigen Patentansprüche. Verfahren und Vorrichtung dienen zur Vereinzelung von flachen Gegenständen aus einem liegenden Stapel, und sind z.B. aus der Dokumente US 6,503,180 B1 und WO 02/30753 A1 bekannt.

Unter dem Begriff ,,liegender Stapel" soll im Folgenden eine Vielzahl von flachen Gegenständen verstanden werden, die mit einer Kante auf einer horizontalen oder schiefen (z.B. leicht abfallenden) Stapelauflage aufstehend mit im wesentlichen parallelen Hauptflächen dicht aneinander gereiht sind. Zur Vereinzelung der Gegenstände aus einem derartigen Stapel werden vom Kopfende des Stapels einzelne Gegenstände nacheinander entfernt, wobei durch eine geeignete Nachführung des Stapels dafür gesorgt wird, dass das Kopfende des Stapels stationär ist.

Eine Vorrichtung zur Vereinzelung von flachen Gegenständen aus einem liegenden Stapel ist beispielsweise bekannt aus der Patentschrift EP-1099632 (bzw. US-6494310, F514). Diese Vorrichtung weist am Kopfende der Stapelauflage, auf der die flachen Gegenstände aufstehen, ein rotierendes Saugrad auf, dessen Umfang sich unmittelbar vor dem Stapelkopfende im wesentlichen senkrecht gegen oben (parallel zu den Hauptflächen der gestapelten Gegenstände) bewegt. Der jeweils vorderste Gegenstand des Stapels wird durch die Stapelnachführung gegen den Saugradumfang gestossen und an diesen angesaugt, derart, dass er am Saugrad gehalten und gegenüber dem Folgegegenstand rutschend von der Stapelauflage weg über den Stapel angehoben wird. Die Saugwirkung am Saugradumfang wird derart gesteuert, dass der Folgegegenstand erst angesaugt und angehoben wird, wenn der vorlaufende Gegenstand bereits über dem Stapel angelangt ist. Durch entsprechende Massnahmen im Stapel wird dabei dafür gesorgt, dass die Gegenstände am Kopfende des Stapels nicht allzu stark gegeneinander gepresst werden, denn eine starke Pressung im Stapel bedeutet auch grosse Reibung zwischen den Gegenständen, was dazu führen kann, dass der zu vereinzelnde Gegenstand nicht allein sondern reibungsbedingt zusammen mit einem oder mehreren Folgegegenständen von der Stapelauflage gehoben wird. Dies ist zu vermeiden, denn es destabilisiert das Stapelkopfende.

Um die Reibung zwischen den Gegenständen im Bereich des Stapelkopfendes gering zu halten, wird in EP-1099632 vorgeschlagen, die im Stapel vorderste Gegenstandsgruppe kräftemässig von einem hinteren Stapelbereich zu trennen und als relativ lokkeren Stapel auf einer leicht abfallenden und vibrierenden Stapelauflage gegen das Kopfende zu bewegen. Dadurch wird dafür gesorgt, dass gegen das Kopfende wirkende, die Gegenstände aneinander und gegen das Kopfende pressende Kräfte und damit die Reibung zwischen den Gegenständen gering bleibt und die Vereinzelung in der genannten, apparativ sehr einfachen Weise zuverlässig durchgeführt werden kann.

Die Vorrichtung gemäss EP-1099632 ist aber aus den genannten Gründen nur anwendbar für die Vereinzelung von relativ stabilen Gegenständen, die in einem sehr lockeren Stapel aufrecht auf einer Kante stehen können. Dabei muss der Stapel umso lockerer sein, je grösser der Reibungskoeffizient zwischen den Gegenständen ist. Die Vorrichtung stellt zudem weitere Anforderungen an die mechanische Stabilität der zu vereinzelnden Gegenstände dadurch, dass diese durch das Saugrad, dessen Umfang sich mit konstanter Geschwindigkeit im wesentlichen senkrecht zur Stapelauflage bewegt, fast schlagartig beschleunigt werden, wodurch empfindliche Gegenstände in unerwünschter Weise deformiert oder gar beschädigt werden könnten, insbesondere dann, wenn durch eine hohe Saugradgeschwindigkeit eine hohe Stückleistung erzielt werden soll. Ferner ist das Saugrad oder die Steuerung eines Saugzyklus an die Höhe der Gegenstände über der Stapelauflage und gegebenenfalls auch an deren Breite anzupassen, das heisst, das Saugrad muss gegebenenfalls für die Verarbeitung von verschiedenen Gegenstandsformaten physisch angepasst werden.

Die Erfindung stellt sich nun die Aufgabe, ein Verfahren und eine Vorrichtung zur Vereinzelung von flachen Gegenständen aus einem liegenden Stapel zu schaffen, wobei es bei Verwendung von Verfahren und Vorrichtung gemäss Erfindung ohne Einstellung möglich sein soll, voneinander bezüglich mechanischer Festigkeit und Steifheit und/oder Format bedeutend verschiedenere Typen von Gegenständen zu handhaben, als dies mit entsprechenden, bekannten Vorrichtungen und Verfahren, die demselben Zwecke dienen, der Fall ist.

Diese Aufgabe wird gelöst durch das Verfahren und die Vorrichtung, wie sie in den Patentansprüchen 1 und 7 definiert sind.

Die erfindungsgemässe Vereinzelung aus einem liegenden Stapel basiert wie bekannte solche Vereinzelungen auf einer Wegförderung des im liegenden Stapel je vordersten Gegenstandes nach oben und vorteilhafterweise mit einer konstanten Geschwindigkeit. Erfindungsgemäss wird aber einer solchen Wegförderung nach oben ein vorbereitender Schritt vorgeschaltet, in dem der je vorderste Gegenstand zuerst erfasst wird, in dem der erfasste Gegenstand dann in einer Richtung im wesentlichen senkrecht zu seinen Hauptflächen vom Kopfende das Stapels getrennt wird und in dem der vom Stapel getrennte Gegenstand dann nach oben beschleunigt wird, wobei die Beschleunigung mit der Trennung oder unmittelbar nach dieser einsetzt. Erst wenn der Gegenstand eine parallel zu seinen Hauptflächen nach oben gerichtete, genügend grosse Geschwindigkeitskomponente hat, wird er von einem Wegfördermittel mit konstanter Geschwindigkeit übernommen und weiter nach oben weggefördert.

Vorteilhafterweise wird der vom Stapelkopfende zu vereinzelnde Gegenstand bei seiner Erfassung gegen den Stapel gedrückt und dadurch für diese Erfassung am Stapel stabilisiert, so dass auch relativ unstabile Gegenstände sicher erfasst werden können. Dadurch, dass der erfasste Gegenstand zu Beginn seiner Beschleunigung nach oben oder davor, das heisst also, wenn er noch keine oder eine sehr kleine Geschwindigkeitskomponente nach oben hat, in einer Richtung quer zu seinen Hauptflächen vom Stapel getrennt wird, wird eine reibungsbedingte Wirkung auf die Vereinzelung ausgeschaltet. Dies bedeutet, dass die gegen das Stapelkopfende gerichtete Presskraft im Stapel von der Vereinzelung unabhängig an andere Gegebenheiten (z.B. Eigensteifigkeit der Gegenstände) angepasst werden kann.

Zur Stabilisierung des Kopfendes des Stapels während der Vereinzelung des je vordersten Gegenstandes sind geeignete Massnahmen zu treffen.

Der der Wegförderung vorgeschaltete, vorbereitende Schritt der erfindungsgemässen Vereinzelung wird vorteilhafterweise mit Hilfe eines an eine steuerbare Saugleitung angeschlossenen Saugers durchgeführt, wobei der Sauger vorteilhafterweise eine elastisch deformierbare Sauglippe aufweist. Der Sauger wird entlang einer Saugerbahn gegen das Kopfende des Stapels und dann von diesem weg bewegt, wobei die Saugerbahn im Bereich des Stapelkopfendes einen Umkehrpunkt aufweist. Mindestens in der unmittelbaren Umgebung des Umkehrpunktes verläuft die Saugerbahn im wesentlichen quer zu den Hauptflächen der gestapelten Gegenstände. Der vom Umkehrpunkt wegführende Saugerbahnteil biegt anschliessend kontinuierlich oder nicht kontinuierlich gegen oben ab. Die Position des Umkehrpunkts ist derart gewählt, dass der Sauger, wenn er im Umkehrpunkt positioniert ist, gegen den vordersten Gegenstand gepresst ist, so dass seine Sauglippe dicht an diesem Gegenstand anliegt und er evakuiert werden kann. Anstelle eines einzelnen Saugers kann auch eine Mehrzahl von in der genannten Art und Weise alternierend agierenden Saugern zur Anwendung kommen. Die Saugerbewegung entlang der genannten Saugerbahn wird beispielsweise in an sich bekannter Weise mittels Gelenk- oder Kurvengetriebe realisiert, wobei ein oder mehrere Sauger an einem solchen Getriebe angelenkt sein können.

Stapelauflage und Sauger sind vorteilhafterweise derart relativ zueinander angeordnet, dass der Stapel unabhängig vom Format der zu vereinzelnden Gegenstände auf einen stationären, seitlichen Anschlag ausgerichtet ist und dass der Sauger derart nahe an der Stapelauflage und am seitlichen Anschlag auf den zu erfassenden Gegenstand trifft, dass er auch zu erwartende Gegenstände mit kleinen Formaten erfassen kann, ohne entsprechend eingestellt werden zu müssen. Wie noch zu zeigen sein wird, ist die Position des Umkehrpunktes relativ zum Stapelkopfende in Abhängigkeit des zu handhabenden Gegenstandtyps vorteilhafterweise einstellbar, was aber mit sehr einfachen Mitteln realisierbar ist.

Für den Wegtransport der Gegenstände werden diese von Greifern übernommen, wobei die Greifer eine konstante Geschwindigkeit haben. Dabei sind Sauger und Greifer derart synchronisiert dass der Sauger bei der Übernahme eine Geschwindigkeitskomponente in der Richtung der Greiferbewegung aufweist, die eine gleiche Grössenordnung aufweist wie die Greifergeschwindigkeit, vorteilhafterweise etwas kleiner ist als diese. Der Greifer greift dabei vorteilhafterweise an derjenigen Gegenstandskante an, die am seitlichen Anschlag ausgerichtet ist und dadurch eine formatunabhängige Position hat, so dass der Greifer und dessen Bahn nicht formatabhängig eingestellt werden muss.

Die Erfindung wird anhand der folgenden Figuren im Detail beschrieben. Dabei zeigen:
- **Figuren 1 und 2**: ein Schema des erfindungsgemässen Verfahrens;
- **Figur 3**: eine beispielhafte Vorrichtung zur Durchführung des erfindungsgemässen Verfahrens (von der Position des Stapelkopfendes aus gesehen, mit Blickrichtung quer zu den Hauptflächen der gestapelten Gegenstände);
- **Figuren 4 bis 7**: die Vorrichtung gemäss Figur 3 mit Blickrichtung parallel zu den Hauptflächen der gestapelten Gegenstände in vier aufeinanderfolgenden Phasen der erfindungsgemässen Vereinzelung;
- **Figur 8**: eine beispielhafte Ausführungsform eines Greifertransporteurs für den Wegtransport der vereinzelten Gegenstände.

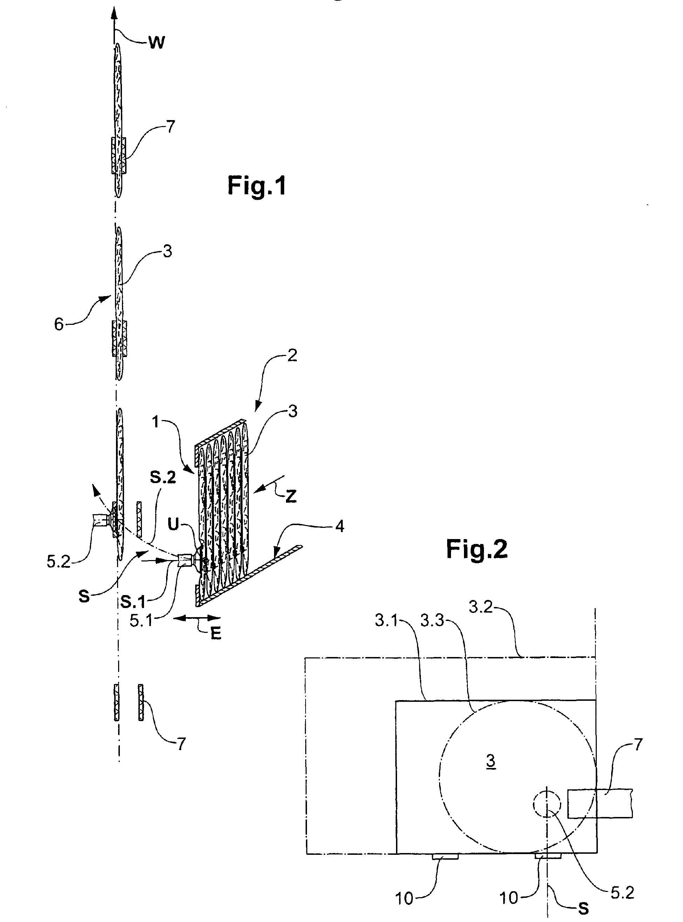

**Figur 1** zeigt in einer sehr schematischen Darstellung die erfindungsgemässe Vereinzelung (Blickrichtung parallel zu den Hauptflächen der gestapelten Gegenstände). Abgebildet sind das Kopfende 1 eines liegenden Stapels 2, in dem die flachen Gegenstände 3 auf einer ihrer Kanten auf einer beispielsweise gegen das Stapelkopfende abfallenden Stapelauflage 4 stehend und in einer Zuführungsrichtung Z gegeneinander gestossen gegen das Stapelkopfende 1 gefördert werden. Ferner dargestellt sind zwei Sauger 5.1 und 5.2 und ein Wegfördermittel in Form eines Greifertransporteurs 6. Die Sauger 5.1 und 5.2 führen alternierend den die Wegförderung gegen oben vorbereitenden Schritt (vordersten Gegenstand erfassen, vom Stapel abtrennen und gegen oben beschleunigen) durch und werden zu diesem Zwecke hintereinander entlang der Saugerbahn S bewegt. Der Greifertransporteur 6 dient als beispielhaftes Wegfördermittel und weist äquidistante, sich in Wegförderrichtung W nach oben bewegende Greifer 7 auf.

Figur 1 stellt eine Momentaufnahme dar. Der erste Sauger 5.1 ist in der Erfassposition, das heisst im Umkehrpunkt U positioniert und gegen das Stapelkopfende 1 gedrückt. Der erste Sauger hat diese Position durch Bewegung entlang eines ersten Saugerbahnteils S.1 erreicht, wobei mindestens das Ende dieses ersten Saugerbahnteils S.1 senkrecht zu den Hauptflächen der gestapelten Gegenstände 3 ausgerichtet ist. In dieser Position wird der erste Sauger evakuiert. Durch die Anpressung wird seine vorteilhafterweise elastisch deformierbare Sauglippe dicht an den zu ergreifenden Gegenstand angedrückt, so dass der Gegenstand sicher erfasst wird, auch wenn dieser Gegenstand weich und/oder uneben ist.

Anschliessend an die Erfassung wird der erste Sauger 5.1 zusammen mit dem erfassten Gegenstand entlang eines zweiten Saugerbahnteils S.2 vom Stapelkopfende 1 weg bewegt, wobei mindestens der Anfang dieses Saugerbahnteils S.2 wiederum im wesentlichen quer zu den Hauptflächen der gestapelten Gegenstände ausgrichtet ist. Anschliessend biegt der zweite Saugerbahnteil beispielsweise kontinuierlich (bogenförmig) gegen oben ab, wobei die Geschwindigkeitskomponente parallel zu den Hauptflächen der gestapelten Gegenstände zunimmt (Beschleunigung nach oben).

Der zweite Sauger 5.2 ist in der Übergabeposition dargestellt, das heisst an einer Stelle, wo der zweite Saugerbahnteil S.2 bzw. die Bahn des vom Sauger erfassten Gegenstandes die Bahn des Wegfördermnittels (z.B. Greifertransporteur 6) kreuzt und der Gegenstand an einen mit dem zweiten Sauger 5.2 entsprechend synchronisierten Greifer 7 übergeben werden kann. Dabei ist die nach oben gerichtete Geschwindigkeitskomponente des Saugers 5.2 ähnlich gross wie die Greifergeschwindigkeit, vorteilhafterweise etwas kleiner, derart, dass der Greifer 7 den Sauger 5.2 vor der Übernahme von unten einholt und dabei der vom Sauger gehaltene Gegenstand in das offene Greifermaul eingeführt wird. Dann wird der Greifer 7 geschlossen und der Sauger 5.2 belüftet.

Wie bereits eingangs erwähnt, hat das Stapelkopfende 1 im Betrieb eine stationäre Position. Da aber die Saugerbahn S, bzw. der Umkehrpunkt U zwischen dem ersten und dem zweiten Saugerbahnteil vorteilhafterweise auf die Konsistenz der zu vereinzelnden Gegenstände abgestimmt wird (für härtere Gegenstände in der Figur 1 mehr links als für weichere Gegenstände), ist die Position des Stapelkopfendes 1 vorteilhafterweise bei einem Wechsel des Gegenstandstyps relativ zur Übergabeposition in der durch den Doppelpfeil E angedeuteten Weise einstellbar. Kleinere Unterschiede betreffend Konsistenz zwischen Gegenstandstypen können ohne entsprechende Einstellung des Stapelkopfendes durch die Deformierbarkeit der Saugerlippe kompensiert werden.

**Figur 2** zeigt schematisch vom Stapelkopfende aus gesehen, wie der Greifer 7 den Gegenstand 3 von der formatunabhängig ausgerichteten Kante (Anschlag durch strichpunktierte Linie angedeutet) her und seitlich versetzt zum Sauger 5.2 ergreift. Ebenfalls in Figur 2 dargestellt sind ferner mit dem Greifer 7 synchronisierte und auf parallelen Bahnen zur Greiferbahn bewegte Stütznocken 10, mit denen insbesondere nicht sehr steife Gegenstände an ihrer nachlaufenden Kante den Greifer unterstützend von unten gestützt werden können. Aus Figur 2 ist auch ersichtlich, dass für einen Wechsel von einem kleineren, rechteckigen Gegenstandstyp 3.1 zu einem grösseren, rechteckigen Gegenstandstyp 3.2 oder zu einem runden Gegenstrandstyp 3.3 weder Sauger noch Greifer eingestellt werden müssen.

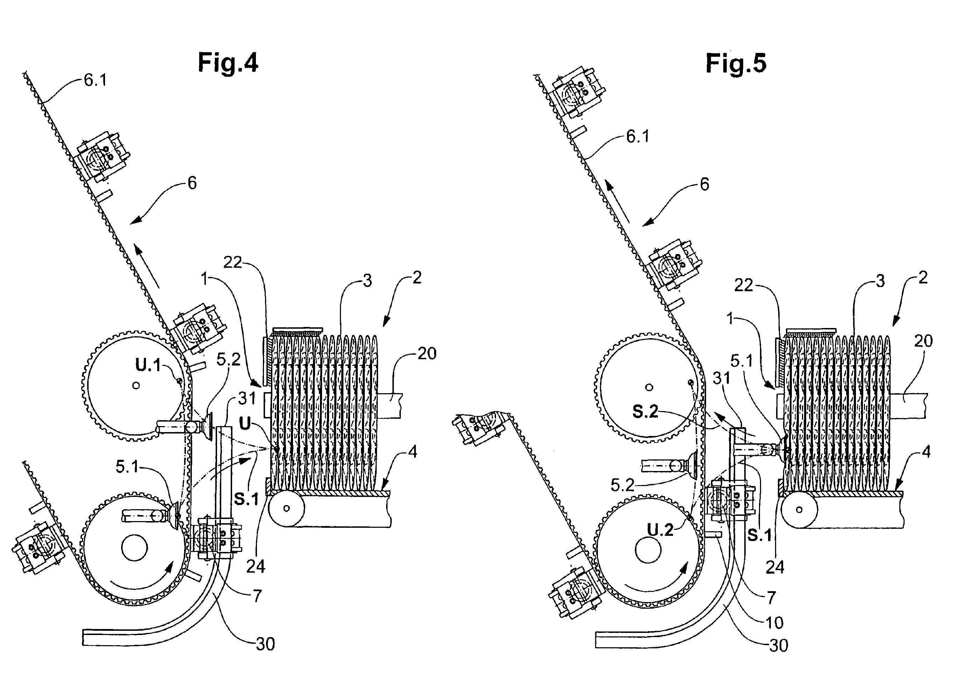

Die Saugerbahn S, von der in der Figur 1 nur die für die Erfassung des Gegenstandes und dessen Trennung und Beschleunigung relevanten Teile (Ende des ersten Saugerbahnteils S.1 und Anfang des zweiten Saugerbahnteils) dargestellt sind, ist vorteilhafterweise in sich geschlossen, derart, dass die Sauger nach der Übergabe eines erfassten Gegenstandes für die Wegförderung wieder gegen das Stapelkopfende 1 bewegt werden. Figuren 4 bis 7 zeigen eine bevorzugte, in sich geschlossene Saugerbahn S.

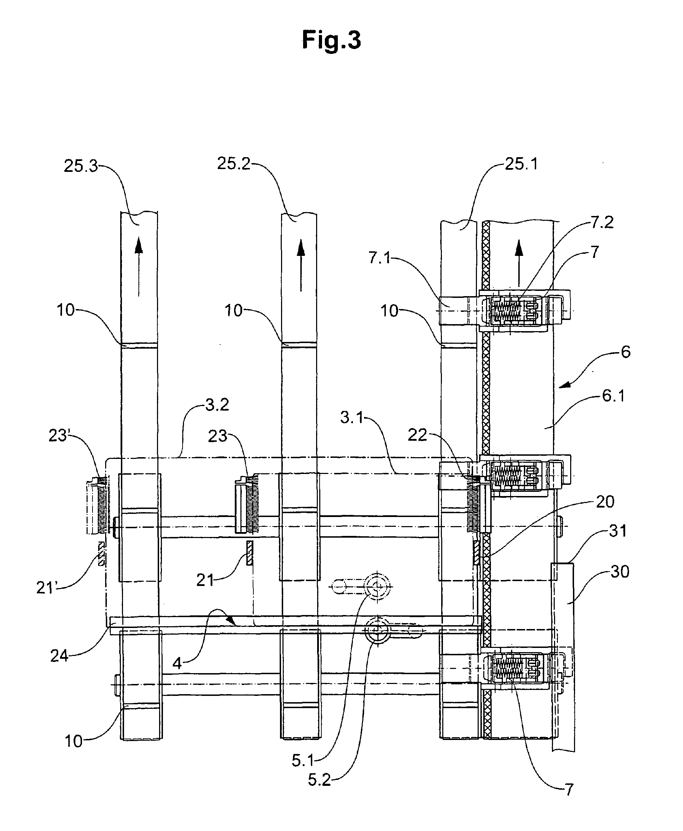

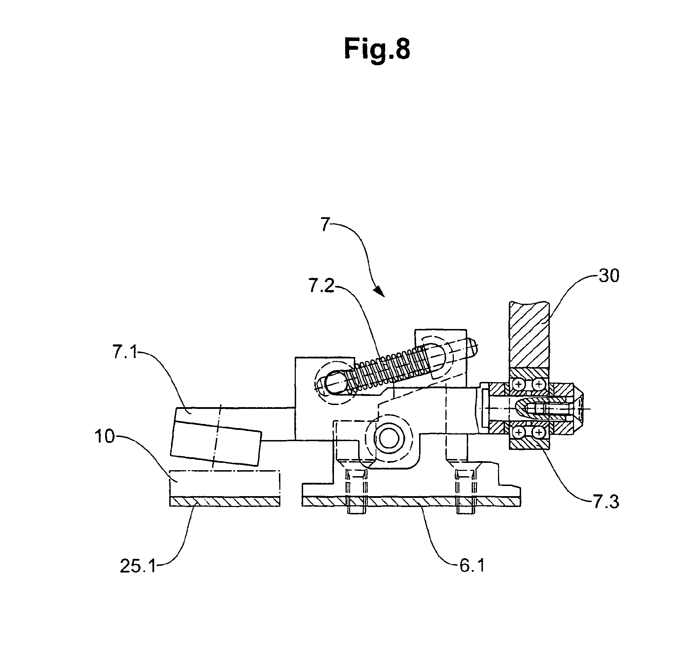

Figur 3 zeigt eine bevorzugte Ausführungsform der erfindungsgemässen Vorrichtung in einem Schnitt parallel zu den Hauptflächen der gestapelten Gegenstände, wobei die Schnittebene hinter dem Stapelkopfende liegt und die Blickrichtung gegen die Übergabeposition gerichtet ist. Figur 3 zeigt die Stapelauflage 4, die Sauger (5.1 in Erfassposition und 5.2 auf dem Rückweg von der Übergabeposition zur Erfassposition) und als Wegfördermittel den Greifertransporteur 6 mit Greifern 7. Figur 3 zeigt auch eine die Greiferfunktion steuernde Kulisse 30 mit Kulissenende 31, auf die im Zusammenhang mit der Figur 8 eingegangen werden soll. Ferner sind strichpunktiert zwei Typen 3.1 und 3.2 von flachen Gegenständen angedeutet. Diese Gegenstände sind in der Position des Kopfendes des Stapels dargestellt, also mit einer Kante auf der Stapelauflage 4 stehend und mit einer weiteren Kante an einem seitlichen Anschlag 20 angeschlagen.

Die Vorrichtung gemäss Figur 3 weist ferner einen dem seitlichen Anschlag 20 entsprechenden Gegen-Anschlag 21 auf, sowie auf verschiedene Kanten oder Kantenbereiche wirkende Stabilisierungsmittel zur Stabilisierung des Stapelkopfendes, hier beispielsweise in Form von seitlichen Bürsten 22 und 23 und einer Fussleiste 24. Während Anschlag 20 und seitliche Bürste 22 auf der Anschlagseite formatunabhängig stationär positioniert sind, sind Gegen-Anschlag 21 und seitliche Bürste 23 auf der Gegenseite durch Verschiebung an verschiedene Formatbreiten anpassbar (ausgezogene Positionen 21 und 23 für Gegenstandstyp 3.1, stichpunktiert dargestellte Positionen 21' und 23' für Gegenstandstyp 3.2).

Zur Stützung der aus dem Stapel vereinzelten Gegenstände, insbesondere für grosse Gegenstände, die gegebenenfalls eine nur kleine eigene Steifigkeit aufweisen, werden vorteilhafterweise, wie bereits im Zusammenhang mit der Figur 2 erwähnt, die Wegförderung durch die Greifer 7 unterstützende Stützmittel vorgesehen. Diese weisen im vorliegenden Fall umlaufend angetriebene Stützriemen 25.1, 25.2 und 25.3 auf, die mindestens im dargestellten Wegförderbereich parallel zum Greifertransporteur 6 verlaufen und mit derselben Geschwindigkeit wie dieser angetrieben werden. Die Stützriemen 25.1 bis 25.3 können mit Stütznocken 10 ausgestattet sein, die von den Riemen abstehen und die nachlaufenden (unteren) Gegenstandskanten stützen.

Die Greifer 7 der Vorrichtung gemäss Figur 3 sind als seitlich von einem umlaufend angetriebenen Greiferriemen 6.1 vorstehende Presselemente 7.1 ausgebildet, die gegen den zwischen Sauger und Greiferriemen 6.1 angeordneten Stützriemen 25.1 pressbar sind. Im ,,geschlossenen" Zustand wird das Presselement 7.1 durch die Feder 7.2 gegen den Stützriemen oder gegen einen darauf abgestützten Gegenstand gepresst, im ,,offenen" Zustand wird das Presselement 7.1 durch die Kulisse 30 gegen die Schliesskraft der Feder 7.2 in einer vom Stützriemen 25.1 distanzierten Stellung gehalten. Selbstverständlich könnten anstelle des als Presselement 7.1 ausgebildeten Greifers 7 auch herkömmliche, beispielsweise an einer Greiferkette angeordnete Greifer mit je zwei gegeneinander pressbaren Klemmbacken zur Anwendung kommen.

Figuren 4 bis 7 zeigen die Vorrichtung gemäss Figur 3 als Seitenansicht (also mit Blickrichtung parallel zu den Hauptflächen der gestapelten Gegenstände) in aufeinanderfolgenden Phasen der Vereinzelung. Gleiche Vorrichtungsteile sind mit denselben Bezugszeichen bezeichnet wie in Figur 3.

Figur 4 zeigt den ersten Sauger 5.1 am Anfang des ersten Saugerbahnteils S.1, also bereit, um entlang dieses Saugerbahnteils gegen das Stapelkopfende 1 bewegt zu werden.

In Figur 5 hat der erste Sauger 5.1 das Ende des ersten Saugerbahnteils S.1, also den Umkehrpunkt U, erreicht und ist damit in Erfassposition. Das heisst, er wird gegen den zu erfassenden vordersten Gegenstand 3 gedrückt und evakuiert, um dann zusammen mit dem erfassten Gegenstand 3 entlang des zweiten Saugerbahnteils S.2 vom Stapelkopfende 1 weg und gegen oben bewegt zu werden.

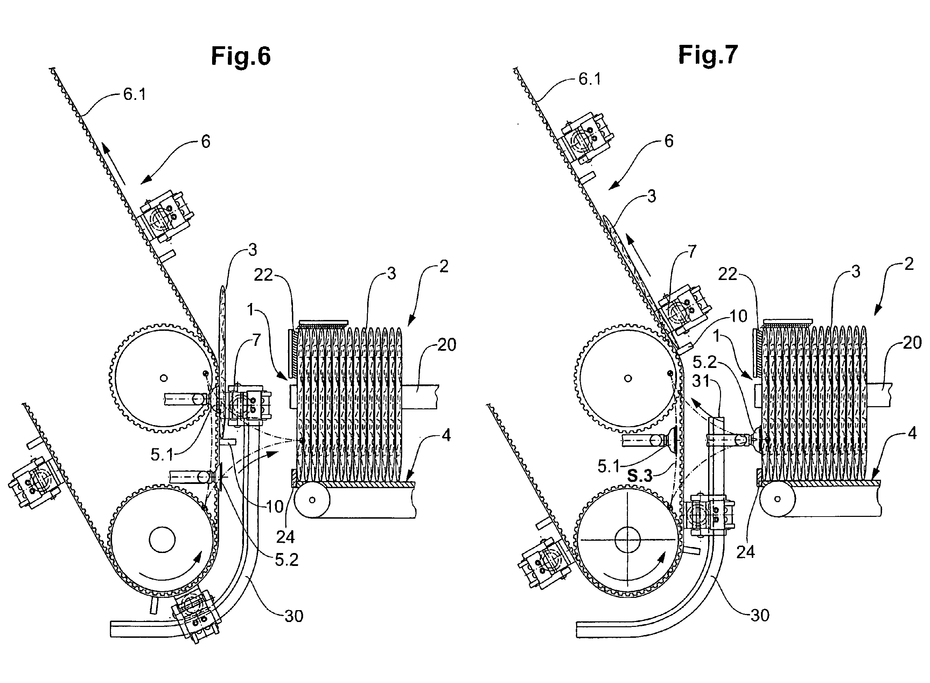

In Figur 6 hat der erste Sauger die Übergabeposition erreicht. Der mit dem Sauger synchronisierte Greifer 7 ist relativ zum zu übernehmenden Gegenstand für die Übernahme (siehe Figur 2) positioniert. Dasselbe gilt für die mit dem Greifer 7 synchronisierten Stütznocken 10. Der Greifer 7 wird nun geschlossen und unmittelbar danach oder gleichzeitig wird der Sauger 5.1 entlüftet.

In Figur 7 ist der erste Sauger 5.1 auf dem dritten Saugerbahnteil S.3, entlang dem er zurück in die Ausgangsposition gemäss Figur 4 bewegt wird. Der vom Greifer 7 ergriffene Gegenstand 3 wird gehalten durch den Greifer 7 und gestützt durch die Stützriemen (nicht sichtbar) und die Stütznocken 10 gegen oben weggefördert.

Der zweite Greifer 5.2 bewegt sich mit einer Phasenverschiebung von 180° entlang derselben Saugerbahn S wie der erste Sauger. Jeder Sauger führt also den vorbereitenden Schritt an jedem zweiten Gegenstand durch.

Figuren 4 bis 7 zeigen eine bevorzugte, in sich geschlossene Saugerbahn S, die im wesentlichen dreieckig ist und zusätzlich zum Umkehrpunkt U im Bereich des Stapelkopfendes 1 zwei weitere Umkehrpunkte U.1 und U.2 aufweist, die vom Stapelkopfende 1 weiter beabstandet sind als die Übergabeposition. Zwischen den Umkehrpunkten U, U. 1 und U.2 ist die Saugerbahn S jeweils bogenförmig. Sie bildet als Ganzes ein gleichschenkliges Dreieck mit konkav gekrümmten Seiten, dessen Scheitelpunkt der Umkehrpunkt U im Bereich des Stapelkopfendes 1 ist. Eine derartige Saugerbahn ist beispielsweise realisierbar mit Saugern, die an einem Gelenkoder Kurvengetriebe angelenkt sind.

Wie bereits weiter oben erwähnt, sind auch andere Saugerbahnen möglich, wobei zwischen erstem und zweitem Saugerbahnteil ein Umkehrpunkt U sein muss, wobei die Saugerbahn unmittelbar vor und unmittelbar nach dem Umkehrpunkt senkrecht zu den Hauptflächen der gestapelten Gegenstände 3 verlaufen muss und wobei der zweite Saugerbahnteil vom Stapelkopfende 1 weg und nach oben zu verlaufen hat.

Es zeigt sich, dass mit der Vorrichtung, wie sie in den Figuren 3 bis 7 dargestellt ist, relativ unstabile flache Gegenstände (z.B. in Plastikfolie eingeschlagene Textilien) mit einer hohen Stückleistung problemlos vereinzelt werden können. Es ist aber mit derselben Vorrichtung und, abgesehen von einer gegebenenfalls notwendigen Einstellung des Umkehrpunktes U, ohne weitere Anpassungen auch möglich, steifere Gegenstände wie beispielsweise CDs zu vereinzeln.

Figur 8 zeigt in Förderrichtung gesehen den bereits im Zusammenhang mit der Figur 3 angesprochenen Greifer 7, der als Presselement 7.1 ausgestaltet und auf einem Greiferriemen 6.1 angeordnet ist. Das Presselement wird durch die Feder 7.2 gegen den Stützriemen 25.1 gepresst. Figur 8 zeigt den Greifer 7 in offenem Zustand, in dem das Presselement 7.1 gegen die Kraft der Feder 7.2 vom Stützriemen 25.1 beabstandet gehalten wird, dadurch, dass die Steuerrolle 7.3 auf der entsprechend angeordneten Kulisse 30 abrollt. Wo die Kulisse 30 aufhört (Kulissenende 31 in Figuren 3 bis 7), oder entsprechend weiter vom Greiferriemen 6.1 entfernt verläuft, bringt die Feder 7.2 das Presselement in seine Pressposition, in der es gegen den Stützriemen 25.1 oder gegen einen wegzufördernden Gegenstand gepresst wird.

## Patentansprüche

1. Verfahren zur Vereinzelung und Wegförderung von flachen Gegenständen (3) aus einem liegenden Stapel (2), wobei die Gegenstände (3) im Stapel (2) auf einer Kante stehend mit parallel ausgerichteten Hauptflächen aneinander gereiht gegen ein Stapelkopfende (1) mit einer stationären Position vorgeschoben werden, wobei für die Vereinzelung der jeweils das Stapelkopfende (1) bildende Gegenstand im wesentlichen quer zu den Haupflächen der gestapelten Gegenstände (3) vom Stapelkopfende (1) getrennt und gleichzeitig mit der Trennung oder unmittelbar danach gegen oben beschleunigt wird und wobei jeder vom Stapelkopfende getrennte und erfasste Gegenstand für die Wegförderung von einem Wegfördermittel mit einer konstanten Geschwindigkeit ergriffen wird und von diesem weggefördert wird, **dadurch gekennzeichnet, dass** die erfassten und gegen oben beschleunigten Gegenstände (3) von dem Wegfördermittel (6) gegen oben weggefördert werden.

2. Verfahren nach Anspruch 1, **dadurch gekennzeichnet, dass** der erfasste Gegenstand (3) für Trennung und Beschleunigung entlang einer bogenförmigen Bahn vom Stapelkopfende (1) weg gegen oben bewegt wird.

3. Verfahren nach einem der Ansprüche 1 oder 2, **dadurch gekennzeichnet, dass** der Gegenstand für die Erfassung im wesentlichen quer zu den Hauptflächen der gestapelten Gegenstände (3) gegen das Stapelkopfende (1) gedrückt wird.

4. Verfahren nach einem der Ansprüche 1 bis 3, **dadurch gekennzeichnet, dass** die erfassten Gegenstände (3) derart gegen oben beschleunigt werden, dass sie, wenn sie vom Weiterfördermittel ergriffen werden, eine gegen oben gerichtete Geschwindigkeitskomponente aufweisen, die gleich gross oder kleiner ist als die Geschwindigkeit des Wegfördermittels.

5. Verfahren nach einem der Ansprüche 1 bis 4, **dadurch gekennzeichnet, dass** die Gegenstände (3) für die Wegförderung zusätzlich gestützt werden.

6. Verfahren nach einem der Ansprüche 1 bis 5, **dadurch gekennzeichnet, dass** die flachen Gegenstände in Plastikfolie eingeschlagene Textilien oder CDs sind.

7. Vorrichtung zur Vereinzelung und Wegförderung von flachen Gegenständen (3) aus einem liegenden Stapel (2), in dem die Gegenstände (3) auf einer Kante aufstehend mit parallel ausgerichteten Hauptflächen aneinander gereiht gegen ein Stapelkopfende (1) mit einer stationären Position vorgeschoben werden und von dem für die Vereinzelung der je vorderste Gegenstand (3) gegen oben weggefördert wird, wobei die Vorrichtung eine Stapelauflage (4), ein mit einer konstanten Geschwindigkeit angetriebenes Wegfördermittel und mindestens einen Sauger (5.1, 5.2) aufweist, der entlang einer Saugerbahn (S) bewegbar ist, wobei die Saugerbahn (S) einen Umkehrpunkt (U) im Bereich des Stapelkopfendes (1) aufweist und mindestens im Bereich dieses Umkehrpunktes (U) im wesentlichen quer zu den Hauptflächen der gestapelten Gegenstände (3) ausgerichtet ist, und wobei ein vom Umkehrpunkt (U) wegführender Saugerbahnteil (S.2) dann gegen oben abbiegt, so dass jeder Gegenstand (3) durch einen Sauger (5.1, 5.2) vom Stapel (2) getrennt, erfasst und gegen oben beschleunigt wird, **dadurch gekennzeichnet, dass** das Wegfördermittel (6) nach oben bewegende Greifer zum Ergreifen der vom Stapel getrennten erfassten und gegen oben beschleunigten Gegenstände (3) aufweist.

8. Vorrichtung nach Anspruch 7, **dadurch gekennzeichnet, dass** der vom Umkehrpunkt (U) wegführende Saugerbahnteil (S.2) die Bewegungsbahn des Wegfördermittels in einer Übergabeposition kreuzt.

9. Vorrichtung nach Anspruch 8, **dadurch gekennzeichnet, dass** eine Distanz zwischen der Übergabeposition und dem Stapelkopfende (1) einstellbar ist

10. Vorrichtung nach einem der Ansprüche 7 bis 9, **dadurch gekennzeichnet, dass** die Saugerbahn (S) in sich geschlossen ist und dass eine Mehrzahl von Saugern (5.1, 5.2) vorgesehen sind, die alle entlang der Saugerbahn (S) bewegbar sind.

11. Vorrichtung nach Anspruch 10, **dadurch gekennzeichnet, dass** die Saugerbahn (S) ein gleichschenkliges Dreieck mit konkav gebogenen Seiten bildet, dessen Scheitelpunkt der Umkehrpunkt (U) ist, wobei zwei weitere Umkehrpunkte (U.1, U.2) jenseits der Übergabeposition angeordnet sind.

12. Vorrichtung nach einem der Ansprüche 7 bis 11, **dadurch gekennzeichnet, dass** die Vorrichtung ferner mit dem Wegfördermittel synchronisierte Stützmittel zur Stützung der wegzufördernden Gegenstände aufweist.

13. Vorrichtung nach Anspruch 12, **dadurch gekennzeichnet, dass** die Stützmittel umlaufend angetriebene Stützriemen (25.1, 25.2, 25.3) mit Stütznocken (10) sind, wobei die Stützriemen mindestens in einem Wegförderbereich parallel zum Wegfördermittel verlaufen.

14. Vorrichtung nach Anspruch 13, **dadurch gekennzeichnet, dass** die Greifer (7) als gegen einen der Stützriemen (25.1) pressbare Presselemente (7.1) ausgebildet sind.

15. Vorrichtung nach Anspruch 14, **dadurch gekennzeichnet, dass** die Presselemente (7.1) auf einem umlaufend angetriebenen Greiferriemen (6.1) angeordnet sind.

16. Vorrichtung nach einem der Ansprüche 7 bis 15, **dadurch gekennzeichnet, dass** die Vorrichtung ferner Stabilisierungsmittel für die Stabilisierung des Stapelkopfendes (1) aufweist.

17. Vorrichtung nach Anspruch 16, **dadurch gekennzeichnet, dass** die Stabilisierungsmittel als seitliche Bürsten (22, 23) und/oder Fussleiste (24) ausgebildet sind.

## Claims

1. Method for separating and conveying away flat articles (3) from a lying stack (2), wherein the articles (3) are fed towards a stationary front end (1) of the stack (2), the articles standing on one edge lined-up one behind the other with their main surfaces aligned in parallel, wherein, for being separated from the stack (2), the foremost article at the front end (1) of the stack is separated from the front end (1) of the stack in a direction essentially perpendicular to the main surfaces of the stacked articles (3), and, simultaneously with the separation or immediately thereafter, is accelerated in an upwards direction and wherein each gripped and accelerated article, for the conveying away, is gripped by a conveying away means at a constant speed and conveyed away by this, **characterized in that** the articles (3) gripped and accelerated upwards are conveyed away by the conveying away means (6) in the upwards direction.

2. Method in accordance with claim 1, **characterised in that**, for separation and acceleration, the gripped article (3) is moved away upwards from the front end (1) of the stack along an arc-shaped track.

3. Method according to one of claims 1 or 2, **characterised in that**, for being gripped, the article (3) is pressed against the front end (1) of the stack in a direction essentially perpendicular to the main surfaces of the stacked articles (3).

4. Method according to one of claims 1 to 3, **characterised in that** the gripped articles (3) are accelerated in upwards direction in such a manner, that they, when they are gripped by the means for conveying further, have a speed component directed upwards, which is of the same magnitude or lower than the speed of the conveying away means.

5. Method in accordance with one of claims 1 to 4, **characterised in that**, on being conveyed away, the articles (3) are additionally supported.

6. Method in accordance with one of claims 1 to 5, **characterised in that** the flat articles are textiles enveloped in plastic foil or CDs.

7. Device for separating and conveying further flat articles (3) from a lying stack (2), in which the articles (3) are fed towards a stationary front end (1), the articles (3) standing on one edge lined-up one behind the other with their main surfaces aligned in parallel, and from which each foremost article (3) is conveyed away upwards, the device comprising a stack support (4), a conveying-away means driven at a constant speed, at least one suction device (5.1, 5.2) capable of moving along a suction device track (S), wherein the suction device track (S) comprises a turning point (U) in the zone of the front end (1) of the stack and at least in the zone of said turning point (U) is oriented essentially perpendicular to the main surfaces of the stacked articles (3), and wherein a part (S.2) of the suction device track leading away from the turning point (U) branches off in upwards direction, such that each article (3) is separated from the stack (2), gripped and accelerated upwards by a suction device (5.1, 5.2), **characterized in that** the conveying away means (6) comprises grippers moving upwards for gripping the articles that are separated from the stack, gripped and accelerated upwards.

8. Device according to claim 7, **characterised in that** said part (S.2) of the suction device track leading away from the turning point (U) intersects with the track of the conveying-away means at a transfer position.

9. Device in accordance with claim 8, **characterised in that** a distance between the transfer position and the front end (1) of the stack is adjustable.

10. Device according to one of claims 7 to 9, **characterised in that** the suction device track (S) is closed in itself and that a plurality of suction devices (5.1, 5.2) is provided, wherein said suction devices (5.1, 5.2) are all capable of being moved along the suction device track (S).

11. Device in accordance with claim 10, **characterised in that** the suction device track (S) forms a triangle with isosceles having concavely curved sides, the zenith of the triangle being the turning point (U), wherein two further turning points (U.1, U.2) are arranged beyond the transfer position.

12. Device in accordance with one of claims 7 to 11, **characterised in that**, for supporting the articles to be conveyed away, the device further comprises supporting means synchronised with the conveying-away means.

13. Device according to claim 12, **characterised in that** the supporting means are driven supporting belts (25-1, 25.2, 25.3) with lifting cogs (10), wherein the supporting belts, at least in a conveying-away zone, run parallel to the conveying-away means.

14. Device in accordance with claim 13, **characterised in that** the grippers (7) are pressing elements (7.1) capable of being pressed against one of the supporting belts (25.1).

15. Device according to claim 14, **characterised in that** the pressing elements (7.1) are arranged on a driven gripper belt (6.1.).

16. Device in accordance with one of claims 7 to 15, **characterised in that** the device further comprises stabilisation means for stabilising the front end (1) of the stack.

17. Device according to claim 16, **characterised in that** the stabilisation means are designed as lateral brushes (22, 23) and/or as a foot (24).

## Revendications

1. Procédé pour séparer un à un des objets (3) et les éloigner d'une pile (2) posée debout, les objets (3) posés debout sur un bord étant rangés l'un contre l'autre dans la pile (2) avec leurs surfaces principales orientées parallèlement et étant avancés contre une extrémité de tête (1) de la pile en position stationnaire, les objets qui forment successivement l'extrémité de tête (1) de la pile étant séparés de l'extrémité de tête (1) de la pile dans une direction essentiellement transversale par rapport aux surfaces principales des objets (3) empilés et étant accélérés vers le haut en même temps que la séparation ou immédiatement après celle-ci, chaque objet séparé et saisi à l'extrémité de tête de la pile étant repris à une vitesse constante par un moyen d'éloignement pour être éloigné et étant éloigné par ce dernier,
**caractérisé en ce que**
les objets (3) saisis et accélérés vers le haut sont éloignés vers le haut par le moyen (6) d'éloignement.

2. Procédé selon la revendication 1, **caractérisé en ce que** pour être séparé et accéléré, l'objet (3) saisi est éloigné de l'extrémité de tête (1) de la pile vers le haut et le long d'une piste en arc de cercle.

3. Procédé selon l'une des revendications 1 ou 2, **caractérisé en ce que** pour être saisi, l'objet est repoussé contre l'extrémité de tête (1) de la pile dans une direction essentiellement transversale par rapport aux surfaces principales des objets (3) empilés.

4. Procédé selon l'une des revendications 1 à 3, **caractérisé en ce que** les objets (3) saisis sont accélérés vers le haut de telle sorte que lorsqu'ils sont repris par le moyen d'éloignement, ils présentent une composante de vitesse orientée vers le haut égale ou inférieure à la vitesse du moyen d'éloignement.

5. Procédé selon l'une des revendications 1 à 4, **caractérisé en ce que** pour être éloignés, les objets (3) reçoivent un soutien supplémentaire.

6. Procédé selon l'une des revendications 1 à 5, **caractérisé en ce que** les objets plats sont des textiles ou des disques compacts emballés dans un film plastique.

7. Dispositif pour séparer un à un et éloigner les objets plats (3) d'une pile (2) posée debout dans laquelle les objets (3) posés debout sur un bord sont rangés les uns contre les autres par leurs surfaces principales orientées parallèlement et sont avancés contre une extrémité de tête (1) de la pile en position stationnaire, et par lequel les objets (3) sont avancés vers le haut pour être séparés un à un, le dispositif présentant un appui de pile (4), un moyen d'éloignement entraîné à une vitesse constante et au moins un dispositif d'aspiration (5.1, 5.2) qui peut se déplacer le long d'une piste d'aspiration (S), la piste d'aspiration (S) présentant un point d'inversion (U) situé dans la zone occupée par l'extrémité de tête (1) de la pile et étant au moins dans la zone occupée par ce point d'inversion (U) orientée essentiellement dans la direction transversale par rapport aux surfaces principales des objets (3) empilés, une partie (S.2) de la piste d'aspiration s'éloignant du point d'inversion (U) s'infléchissant ensuite vers le haut de telle sorte que chaque objet (3) soit séparé de la pile (2) par un dispositif d'aspiration (5.1, 5.2), saisi et accéléré vers le haut,
**caractérisé en ce que**
le moyen (6) d'éloignement présente des dispositifs de saisie déplacés vers le haut qui reprennent les objets (3) séparés de la pile, saisis et accélérés vers le haut.

8. Dispositif selon la revendication 7, **caractérisé en ce que** la partie (S.2) d'aspiration qui s'éloigne du point d'inversion (U) croise le parcours du déplacement du moyen d'éloignement dans une position de transfert.

9. Dispositif selon la revendication 8, **caractérisé en ce que** la distance entre la position de transfert et l'extrémité de tête (1) de la pile est ajustable.

10. Dispositif selon l'une des revendication 7 à 9, **caractérisé en ce que** la piste d'aspiration (S) est intrinsèquement fermée et **en ce que** plusieurs dispositifs d'aspiration (5.1, 5.2) qui peuvent tous se déplacer le long de la piste d'aspiration (S) sont prévus.

11. Dispositif selon la revendication 10, **caractérisé en ce que** la piste d'aspiration (S) forme un triangle équilatéral dont les côtés ont une courbure concave et dont le sommet forme le point d'inversion (U), deux autres points d'inversion (U.1, U.2) étant situés respectivement de chaque côté de la position de transfert.

12. Dispositif selon l'une des revendications 7 à 11, **caractérisé en ce que** le dispositif présente en outre des moyens de soutien synchronisés par rapport au moyen d'éloignement, pour soutenir les objets qui doivent être éloignés.

13. Dispositif selon la revendication 12, **caractérisé en ce que** les moyens de soutien sont des courroies de soutien (25.1, 25.2, 25.3) entraînées en boucle fermée et dotées de cames de soutien (10), les courroies de soutien s'étendant parallèlement au moyen d'éloignement au moins dans une zone d'éloignement.

14. Dispositif selon la revendication 13, **caractérisé en ce que** les dispositifs de saisie (7) sont configurés comme éléments de poussée (7.1) qui peuvent être repoussés contre l'une des courroies de soutien (25.1).

15. Dispositif selon la revendication 14, **caractérisé en ce que** les éléments de poussée (7.1) sont disposés sur une courroie (6.1) de dispositifs de saisie entraînée sur une boucle fermée.

16. Dispositif selon l'une des revendications 7 à 15, **caractérisé en ce que** le dispositif présente en outre des moyens de stabilisation qui stabilisent l'extrémité de tête (1) de la pile.

17. Dispositif selon la revendication 16, **caractérisé en ce que** les moyens de stabilisation sont configurés comme brosses latérales (22, 23) et/ou comme lattes de pied (24).
